Europäisches Patentamt

European Patent Office

Office européen des brevets

(19)

(11) Numéro de publication: **0 298 799**
**B1**

(12) **FASCICULE DE BREVET EUROPEEN**

(45) Date de publication du fascicule du brevet: **23.01.91**

(51) Int. Cl.⁵: **B 65 B 53/00**

(21) Numéro de dépôt: **88401484.6**

(22) Date de dépôt: **15.06.88**

(54) **Dispositif pour délivrer un film préétiré à bords renforcés.**

(30) Priorité: **02.07.87 FR 8709390**

(43) Date de publication de la demande:
**11.01.89 Bulletin 89/02**

(45) Mention de la délivrance du brevet:
**23.01.91 Bulletin 91/04**

(84) Etats contractants désignés:
**AT BE CH DE ES FR GB GR IT LI LU NL SE**

(56) Documents cités:
**DE-A-1 625 615**
**GB-A-2 134 068**

(73) Titulaire: **REBICHON-SIGNODE**
**3 rue de l'hôpital Saint-Louis**
**F-75481 Paris Cédex 10 (FR)**

(72) Inventeur: **Raverot, Henry**
**42 rue Ampère**
**F-75017 Paris (FR)**

(74) Mandataire: **Robert, Jean-Pierre et al**
**CABINET BOETTCHER 23, rue la Boétie**
**F-75008 Paris (FR)**

Courier Press, Leamington Spa, England.

## Description

L'un des procédés d'emballage de produits, notamment sur palettes consiste à enrouler, autour de l'objet ainsi constitué, un film de matière plastique issu d'une tête délivrant ce film à l'état préétiré de manière qu'une fois posé sur l'objet, il se rétracte, colle à l'objet et à une portion marginale du film formant le tour de banderolage précédent, et confère une cohésion à l'ensemble palette et empilage qu'elle porte permettant son transport et sa manutention sans risques d'écroulement de la charge.

On tend à diminuer le plus possible l'épaisseur du film qui constitue l'emballage, de manière à en diminuer le poids donc le coût de la matière utilisée, en procédant un étirage pouvant aller jusqu'à quatre fois la longueur initiale. Cette opération fragilise énormément le film qui, outre les risques de rupture qu'il présente au moment de sa mise en place, rend l'emballage ainsi constitué sensible au moindre accroc qui peut se traduire par une déchirure ruinant au moins partiellement la cohésion initialement réalisée.

La présente invention tend pallier cet inconvénient sans pour autant modifier l'épaisseur du film, en équipant la tête de la machine de moyens conduisant à un renforcement important d'au moins les bords du film afin de supprimer tout risque de rupture de ce dernier. Les moyens de l'invention permettent également de pouvoir régler facilement la largeur du film qui est banderolé.

A cet effet, elle a pour objet un dispositif pour délivrer un film en matériau plastique préétiré à bords renforcés, comportant en aval d'un dispositif d'étirage, un rouleau de renvoi comprenant une partie centrale sensiblement cylindrique et deux extrémités évasées vers l'extérieur, la longueur axiale de la partie cylindrique étant inférieure à la largeur du film en sortie du dispositif d'étirage.

Dans un mode préféré de réalisation, au moins l'une des extrémités évasées est montée à coulissement axial sur la partie centrale cylindrique et est attelée à un organe moteur pour modifier leur position axiale mutuelle.

L'invention sera mieux comprise au cours de la description donnée ci-après à titre purement indicatif et non limitatif qui permettra d'en dégager les avantages et les caractéristiques secondaires.

Il sera fait référence aux dessins annexés dans lesquels:

la figure 1 illustre schématiquement le dispositif selon l'invention;

la figure 2 est une variante de réalisation de la figure 1;

la figure 3 montre schématiquement une tête de machine à banderoler.

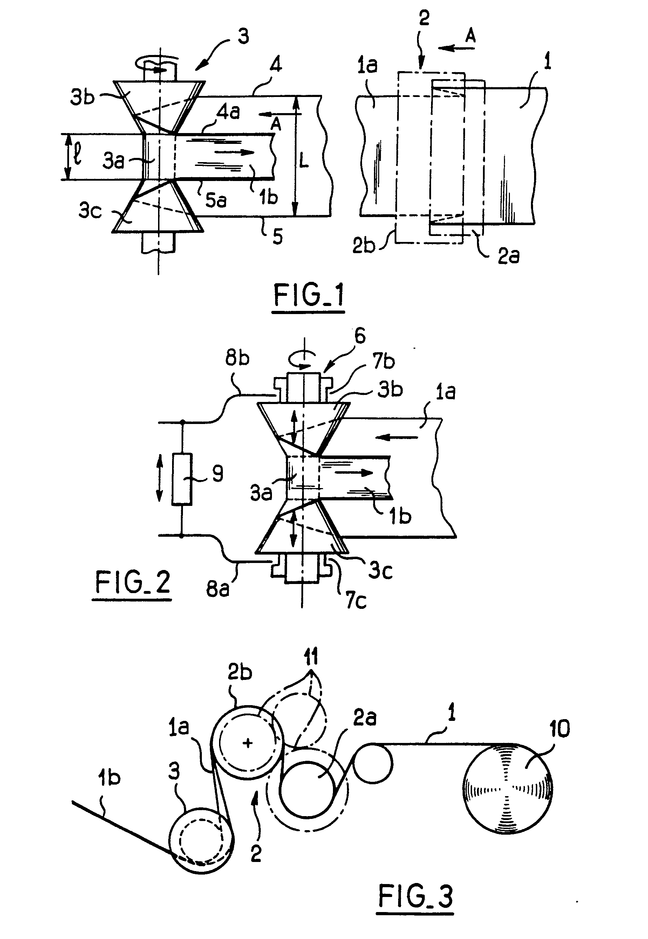

Sur la figure 1, on voit un film 1 en matière plastique (par exemple en polyéthylène) pénétrant dans le sens A dans un dispositif d'étirage 2 pour en ressortir en 1a à l'état étiré de manière qu'il puisse se rétracter par la suite sur l'objet qu'il doit envelopper. En général, ce film est encollé sur une face pour adhérer à l'objet qu'il doit envelopper comme indiqué au préambule cidessus. On notera que le dispositif 2 comporte usuellement deux rouleaux 2a et 2b dont les vitesses périphériques sont différentes (celle du rouleau de sortie étant plus importante que celle du rouleau d'entrée), de manière que le film subisse entre eux un allongement dans le domaine plastique égal sensiblement au rapport des vitesses. Si cet allongement est suffisamment important (de l'ordre de 200 à 400%) on constate que le produit allongé 1a possède une certain élasticité que l'on peut conserver en maintenant le film sous une tension équilibrant sensiblement cette tendance à la rétraction jusqu'au produit à envelopper où, relaché, l'effet de rétraction pourra s'exercer. On a même remarqué qu'aux vitesses de banderolage usuelles, on profite d'un certain retard dans l'établissement de la rétraction suffisant pour pourvoir se dispenser d'exercer cette tension de maintien du film. Il existera cependant toujours une tension due à l'enveloppement lui-même du produit à emballer qui tourne relativement au point de fourniture du film.

Le film 1a, avant donc d'être enroulé autour du produit à emballer, qui n'est pas représenté, passe sur un rouleau de renvoi 3. Dans le cas de la figure l'angle de déviation du film est de 180°, mais bien entendu il sera dans la practique inférieur à cette valeur tout en conservant une valeur largement supérieure à 90° pour obtenir l'effet recherché.

Le rouleau de renvoi 3 présente la particularité de posséder une partie centrale 3a cylindrique et deux extrémités 3b et 3c évasées vers l'extérieur (ici coniques). La largeur L du film 1a après étirage est supérieure à la longueur axiale l de la partie cylindrique 3a si bien que, lors de l'enroulement du film sur le rouleau 3, on constate que les bords 4 et 5 du film 1a se plissent, se roulent partiellement sur eux-mêmes, s'agglomèrent grâce à la colle, se déforment en augmentant d'épaisseur au détriment de la largeur du film qui devient sensiblement égale à la longueur de la partie cylindrique.

Le film 1b, en aval du rouleau 3, possède des rives 4a et 5a devenues beaucoup plus résistantes tout en ayant conservé un pouvoir de rétraction longitudinale sensiblement égal à celui de la partie centrale du film 1b.

Le film devient alors extrêmement résistant aux amorces de rupture transversales. L'un des premiers avantages de ce résultat consiste dans le fait que l'on peut banderoler un produit avec un recouvrement plus faible de film d'un tour à l'autre. En d'autres termes, le "pas" d'hélice autour du produit peut être plus important, d'où un gain dans la quantité de produit consommée.

Un second avantage réside dans le fait que l'on peut, par exemple au sommet d'un empilage cubique ou parallélépipédique, banderoler à cheval sur les arêtes supérieures avec un bord de film sur la face supérieure du paquet très résistant.

Un troisième avantage résultant du traitement du film par le dispositif selon l'invention, réside en plus du renforcement des bords, dans un moyen de faire aisément varier au cours d'une opération de banderolage, la largeur du film étiré. Il suffit en effet de faire varier la longueur *l* pour obtenir une largeur de film 1*a* différente. Cette variation peut être très rapide, si bien que l'on peut réaliser par ce biais des zones dans lesquelles la largeur du film est suffisamment faible pour ne pas chevaucher le film précédemment enroulé et ainsi laisser des espaces pour l'aération du produit empaqueté.

La figure 2 illustre très schématiquement un moyen pour faire varier cette longueur *l*. On peut ainsi réaliser les deux parties coniques 3*b* et 3*c* coulissantes sur un axe cylindrique 6 dont la partie entre cônes constitue la portion cylindrique 3*a*. Ces parties coniques 3*b* et 3*c* comportent à l'arrière une gorge 7*b*, 7*c* dans chacune desquelles peut être engagée une fourchette 8*a*, 8*b* de commande de leur déplacement axial. Pour ce faire, chaque fourchette est solidaire des extrémités d'un vérin 9 dont l'extésion ou la rètraction entraîne l'écartement ou le rapprochement des fourchettes donc des parties tronconiques 3*b*, 3*c*. On voit donc comment on peut modifier la largeur de la partie 1*b* de film délivré. Il est certain que le dispositif moteur pour déplacer les parties coniques peut être de tout type convenable et relié aux parties coniques par une transmission adéquate.

Sur la figure 3 on a schématiquement représenté une tête de machine à banderoles qui dévide une bobine 10 de film en matière plastique, préencollé, au moyen d'un dispositif d'étirage 2 dont les rouleaux sont motorisés, la vitesse de l'un 2*a* étant une fraction de la vitesse de l'autre grâce à une pignonerie 11 de transmission démultipliée, le rouleau 3 étant placé en aval du rouleau 2*b*, le film 1*b* se dirigeant vers le produit à empaqueter. L'ensemble représenté à cette figure peut être monté sur un chariot, lequel est animé, de manière connue, d'un mouvement circulaire autour du produit à empaqueter et d'un mouvement vertical pour former un banderolage en hélice. Cet ensemble peut également être fixe, le produit tournant sur lui-même et se déplaçant verticalement. On peut également prévoir que le mouvement vertical seul soit affecté à l'un des chariot et produit, la rotation étant affectée à l'autre.

Le rouleau 3 peut également être placé comme dernier rouleau de la tête, fixe ou sur un bras oscillant d'accumulation, ou comme un rouleau intermédiaire entre le dispositif d'étirage et un rouleau de renvoi final fixe ou d'accumulation.

**Revendications**

1. Dispositif pour délivrer un film (1*b*) en matériau plastique préétiré à bords (4*a*, 4*b*) renforcés caractérisé en ce qu'il comporte en aval d'un dispositif d'étirage (2), un rouleau (3) de renvoi comprenant une partie centrale (3*a*) sensiblement cylindrique et deux extrémités (3*b*, 3*c*) évasées vers l'extérieur, la longueur axiale (*l*) de la partie cylindrique étant inférieure à la largeur (L) du film en sortie du dispositif d'étirage (2).

2. Dispositif selon la revendication 1, caractérisé en ce que la longueur axiale (*l*) de la partie centrale cylindrique (3*a*) est réglable.

3. Dispositif selon la revendication 2, caractérisé en ce qu'au moins l'une des extrémités (3*b*, 3*c*) évasées est montée à coulissement axial sur la partie centrale (3*a*) cylindrique et est attelée à un organe moteur (9) pour modifier leur position axiale mutuelle.

4. Dispositif selon l'une quelconque des revendications précédentes, caractérisé en ce que le rouleau (3) susdit constitue l'un des rouleaux de renvoi situé en aval du dernier rouleau d'étirage (2*b*) d'une tête de machine d'emballage par banderolage.

**Patentansprüche**

1. Vorrichtung zum Abliefern einer aus Kunststoff bestehenden vorgereckten Folie (1*b*) mit verstärkten Kanten (4*a*, 4*b*), umfassend eine einer Streckvorrichtung (2) nachgeordnete Umlenkrolle (3) mit einem im wesentlichen zylindrisch ausgebildeten Mittelstück (3*a*) und zwei nach außen sich erweiternden Endabschnitten (3*b*, 3*c*), wobei die axiale Länge (*l*) des zylindrischen Stückes geringer als die Breite (L) der Folie beim Austritt aus der Streckvorrichtung (2) ist.

2. Vorrichtung nach Anspruch 1, bei der die axiale Länge (*l*) des zylindrischen Mittelstücks (3*a*) verstellbar ist.

3. Vorrichtung nach Anspruch 2, bei der zumindest einer der sich erweiternden Endabschnitte (3*b*, 3*c*) auf dem zylindrischen Mittelstück (3*a*) in axialer Richtung verschiebbar angeordnet ist und an ein Antriebselement (9) zum Verändern von deren gegenseitiger axialer Stellung gekuppelt ist.

4. Vorrichtung nach einem der vorherigen Ansprüche, bei der die Rolle (3) die eine der Umlenkrollen bildet, die der letzten Streckrolle (2*b*) des Kopfes einer Banderolierverpackungsmaschine nachgeordnet ist.

**Claims**

1. Apparatus for delivering a film (1*b*) of prestretched plastic material with reinforced edges (4*a*, 4*b*), incorporating a stretching device (2) located downstream, a return roller (3) having a central section (3*a*) essentially cylindrical, and with two end sections (3*b*, 3*c*) flared towards the outside, the axial length (*l*) of the cylindrical section being less than the width (L) of the film issuing from the stretching device (2).

2. Device according to Claim 1, characterised in that the axial length (*l*) of the central cylindrical section (3*a*) is adjustable.

3. Device according to Claim 2, characterised in that at least one of the flared ends (3*b*, 3*c*) is fixed through axial sliding on the central cylindrical section (3*a*) and linked to a power unit (9) to modify their mutual axial position.

4. Device according to any one of the preceding claims, characterised in that the abovementioned roller 3 constitutes one of the return rollers located downstream of the last stretching roller (2b) of a banderoling packaging machine head.

FIG_1

FIG_2

FIG_3